(19) Europäisches Patentamt
European Patent Office
Office européen des brevets

(11) **EP 3 507 576 B1**

(12) **EUROPEAN PATENT SPECIFICATION**

(45) Date of publication and mention
of the grant of the patent:
**19.01.2022 Bulletin 2022/03**

(51) International Patent Classification (IPC):
***G01H 11/08*** (2006.01)   ***G10K 9/122*** (2006.01)

(21) Application number: **17845540.8**

(52) Cooperative Patent Classification (CPC):
**G01H 11/08; G01H 3/00; G10K 9/122;** G01V 1/186;
G10K 9/125

(22) Date of filing: **31.08.2017**

(86) International application number:
**PCT/CN2017/100075**

(87) International publication number:
**WO 2018/041238 (08.03.2018 Gazette 2018/10)**

(54) **HYDROPHONE AND COMPOUND HYDROPHONE**

HYDROPHON UND ZUSAMMENGESETZTES HYDROPHON

HYDROPHONE ET HYDROPHONE COMPOSITE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **31.08.2016 CN 201610798527**

(43) Date of publication of application:
**10.07.2019 Bulletin 2019/28**

(73) Proprietor: **Beijing Supersonic Technology Co.,
Ltd.
Beijing 100192 (CN)**

(72) Inventors:
• **LIU, Guoxi
Beijing 100192 (CN)**
• **WANG, Penghui
Beijing 100192 (CN)**

• **WANG, Zhipeng
Beijing 100192 (CN)**
• **SHI, Huaduo
Beijing 100192 (CN)**

(74) Representative: **Berggren Oy
P.O. Box 16
Eteläinen Rautatiekatu 10A
00101 Helsinki (FI)**

(56) References cited:
**CN-A- 104 486 705      CN-A- 106 404 158
CN-A- 106 441 545      CN-U- 201 697 713
CN-U- 206 132 211      CN-U- 206 132 989
US-A- 2 762 032         US-A- 3 263 208
US-A- 3 970 878         US-A- 5 541 894
US-A1- 2013 042 695    US-A1- 2013 208 571
US-B1- 8 816 570**

## Description

## Cross-reference to Related Application

The present application claims the priority of the Chinese patent application filed with the State Intellectual Property Office, with the filing No. 2016107985272, filed on August 31, 2016, entitled "Hydrophone, Transduction Method, and Compound Hydrophone".

## Technical Field

The present invention relates to the technical field of hydrophones, and particularly to a hydrophone, and a compound hydrophone.

## Background Art

With the continuous development and progress of science and technology, application technology of hydrophones has also gradually developed and matured. Owing to the capability of converting an acoustic signal generated by changes of an underwater pressure into an electric signal, hydrophones can reliably obtain an underwater pressure and have been further widely applied. In the existing technologies, most of the hydrophones are hydrophones of a spherical or circular tube structure made from a piezoelectric ceramic material, or hydrophones of a plane or curved structure made from a piezoelectric ceramic composite material. The sensitivity of the hydrophone is in a positive correlation with a piezoelectric coefficient of the piezoelectric material for making the hydrophone. However, the existing piezoelectric ceramic materials have a relatively low piezoelectric coefficient, and then the resulting hydrophones have relatively low sensitivity, and are unable to meet design requirements. Moreover, since the acoustic impedance of the piezoelectric ceramic material is far higher than water medium, most of acoustic energies in water are reflected back to water at an interface where water and the ceramic contact, further causing reduced receiving sensitivity of the hydrophone.

Document US2013/0208571 discloses a hydrophone comprising: a rigid tubular substrate; an annular cavity formed around the rigid tubular substrate by affixing a tubular diaphragm around the rigid tubular substrate; a flexible piezoelectric element wrapped around and bonded to the flexible tubular diaphragm; and a moulded portion covering the piezoelectric element.

## Disclosure of the Invention

In view of this, an object of the present invention is to provide a hydrophone and a compound hydrophone, so as to effectively improve mini-size or medium-size hydrophones in terms of the receiving sensitivity and accuracy of measuring pressure intensity.

Examples of the present invention are realized as follows:

A hydrophone (100), comprising: a rectangular-shape transduction element (110) of two end sensing faces, a damping shell or wrapping (121), a rigid tubular housing (122), a first sound-permeable seal (130), a second sound-permeable seal (140) and wires (150); wherein the first sound-permeable seal (130) covers one open end of the rigid tubular housing (122), the second sound-permeable seal (140) covers the other open end of the rigid tubular housing (122), and the rectangular-shape transduction element (110) is connected to an external load via wires (150) through either or both sound-permeable seals; wherein both the first and second sound-permeable seals (130, 140) serve to waterproof the rectangular-shape transduction element (110) from external environment while allowing the acoustic signal in water to transmit through them to the rectangular-shape transduction element (110); characterized in that the rectangular-shape transduction element is made of lead based relaxor element solid solution piezoelectric single crystal polarized in a [011] crystal direction and having either [100] or [0-11] crystal direction as the sensing direction, the latter being also the axial direction of the transduction element; wherein said relaxor single crystal comprises solid solutions of lead zinc niobate-lead titanate, lead magnesium niobate-lead titanate, lead magnesium niobate-lead zirconate titanate, lead indium niobate-lead magnesium niobate-lead titanate, or derivative compositions thereof; wherein the damping shell or wrapping (121) is applied over all side faces of the rectangular-shape transduction element except both end sensing faces; wherein the rigid tubular housing (122) sleeves the wrapped rectangular-shape transduction element (110) so that the damping shell or wrapping (121) helps to damp out rubbing noise produced by the friction between the rectangular-shape transduction element (110) and a bore surface of the rigid tubular housing; wherein said rectangular-shape transduction element (110) receives the acoustic signal via its both end faces and converts the acoustic signal to an electric signal and outputs the electric signal to the external load.

Further, there are a plurality of the rectangular-shape transduction elements, one end of each of the rectangular-shape transductions elements is connected with one end of an adjacent rectangular-shape transduction element, and the other end of each of the rectangular-shape "transduction elements is connected with the other end of the adjacent rectangular-shape transduction element.

Further, there are a plurality of the rectangular-shape transduction elements, the plurality of the rectangular-shape transduction elements are arranged in parallel along a width direction, and every two adjacent rectangular-shape transduction elements are connected with each other.

In a second aspect, an example of the present invention provides a compound hydrophone, comprising a housing, a plurality of cavities, and a plurality of hydrophones. Each of the cavities penetrates through the housing, each of the cavities and an adjacent cavity define an angle, and each of the hydrophones is arranged in the cavity.

Further, a shape and a size of each of the cavities are matched with a shape and a size of the hydrophone.

Further, the housing is of a columnar structure, all the cavities are arranged successively between one end of the housing and the other end of the housing, and each of the cavities and an adjacent cavity define an angle.

The beneficial effects of the examples of the present invention are as follows: with the tubular structure of the shell, the shell can sleeve at least one rectangular-shape transduction element. By sleeving one end of the shell with the first sound-permeable sealing sheet and sleeving the other end of the shell with the second sound-permeable sealing sheet, and coupling the two ends of the rectangular-shape transduction elements with the external load through the wires, the coupling of the transduction element with the external load is realized while the transduction element is sealed underwater.

Both the first sound-permeable sealing sheet and the second sound-permeable sealing sheet isolate each of the rectangular-shape transduction elements from the external environment, and transmit the acoustic signal in water to each rectangular-shape transduction element. Each rectangular-shape transduction element is able to receive through one end thereof the acoustic signal input by the first sound-permeable sealing sheet and receive through the other end thereof the acoustic signal input by the second sound-permeable sealing sheet, and convert the acoustic signal to an electric signal and output the electric signal to the external load. The external load, by calculating a value of pressure corresponding to the electric signal, can precisely obtain a pressure intensity measured in water. Since the rectangular-shape transduction element in the hydrophone is sleeved by the shell, and the shell is of a tubular structure, the two ends of the rectangular-shape transduction element are free ends which are not enclosed by the shell. Since the two ends of the rectangular-shape transduction element are free, the fundamental frequency of the transduction element is that of half-wavelength mode, the operating frequency range of the hydrophone thereby can be effectively extended, moreover, the piezoelectric sensing element used has the characteristics of a higher transverse piezoelectric coefficient than the commonly used piezoelectric ceramic which is excited in an unconstrained state and the acoustic impedance close to water medium, the receiving sensitivity of the hydrophone 100 is effectively improved.

Other features and advantages of the present invention will be illustrated in the following description, and partially become apparent from the description or are understood by implementing the examples of the present invention. The object and other advantages of the present invention can be realized and obtained through structures particularly indicated in the description, the claims, and the drawings.

**Brief Description of Drawings**

In order to more clearly illustrate technical solutions of examples of the present invention or the prior art, figures which are needed for description of the examples will be introduced briefly below. Apparently, the figures below merely show some examples of the present invention, and a person ordinarily skilled in the art still can obtain other relevant figures according to these figures, without paying inventive effort. With the figures, the above and other objects, features, and advantages of the present invention will become clearer. The same reference signs indicate the same parts throughout the figures. The figures are not intended to be drawn to scale.

Fig. 1 shows a section view of a first embodiment of a hydrophone provided in a first example of the present invention;

Fig. 2 shows a section view of a second embodiment of a hydrophone provided in the first example of the present invention;

Fig. 3 shows a flow chart of a transduction method which does not form a part of the present invention;

Fig. 4 shows a structural schematic view of a first embodiment of a compound hydrophone provided in the first example of the present invention;

Fig. 5 shows a structural schematic view of a second embodiment of a compound hydrophone provided in the first example of the present invention;

Fig. 6 shows a structural schematic view of a third embodiment of a compound hydrophone provided in the first example of the present invention;

Fig. 7 shows a structural schematic view of a fourth embodiment of a compound hydrophone provided in the first example of the present invention;

Fig. 8 shows a structural schematic view of a fifth embodiment of a compound hydrophone provided in the first example of the present invention;

Fig. 9 shows a structural schematic view of a sixth embodiment of a compound hydrophone provided in the first example of the present invention;

Fig. 10 shows a structural schematic view of a hydrophone provided in a second example of the present invention;

Fig. 11 shows a structural schematic view of another hydrophone provided in the second example of the present invention;

Fig. 12 shows a structural schematic view of a compound hydrophone provided in a third example of the present invention;

Fig. 13 shows a structural schematic view of another compound hydrophone provided in a third example of the present invention;

Fig. 14 shows a schematic view of a mounting position of a sound-permeable sealing structure provided in the third example of the present invention.

Reference signs: 100 (300)-hydrophone; 110 (311) rectangular-shape transduction element; 120-shell; 121-acoustic damping shell; 122-housing; 130-first sound-permeable sealing sheet; 140-second sound-permeable sealing sheet; 150 (313)-wire; 200 (400, 500)-compound hydrophone; 210-housing; 220-cavity; 310-sensor element; 312-side surface; 320-first shell; 330-second shell; 341-first sound-permeable sealing structure; 342-second sound-permeable sealing structure; 410 (510)-housing; 411-third end portion; 412-fourth end portion; 413 (513)-columnar cavity; 511-annular structure; 512-protrusion; 520-sound-permeable sealing assembly.

## Detailed Description of Embodiments

In order to make the objects, technical solutions, and advantages of the examples of the present application clearer, below the technical solutions in the examples of the present application will be described clearly and completely in conjunction with the figures in the examples of the present application. Apparently, some but not all examples of the present application are described. Generally, components in the examples of the present application described and shown in the figures herein can be arranged and designed in different configurations.

It should be noted that similar reference signs and letters represent similar items in the following figures, therefore, once a certain item is defined in one figure, it is not needed to be further defined or explained in subsequent figures.

In the description of the present application, it should be indicated that orientational or positional relationships indicated by terms such as "top", "bottom", "side", "inner", and "outer" are based on orientational or positional relationships as shown in the figures, or orientational or positional relationships in which a product of this application is conventionally placed in use, merely for facilitating describing the present application and simplifying the description, rather than indicating or suggesting that related devices or elements have to be in the specific orientation or configured and operated in specific orientation, therefore, they should not be construed as limiting the present application. Besides, terms such as "first" and "second" are merely for descriptive purpose, but should not be construed as indicating or implying relative importance.

In the description of the present application, it also should be indicated that unless otherwise specified and defined, terms "arrange" and "connect" should be understood in a broad sense, for example, the connection can be a fixed connection, a detachable connection, or an integrated connection; it can be a mechanical connection or an electrical connection; and it can be a direct connection or an indirect connection through an intermediate medium; and it also can be an inner communication between two elements. For a person ordinarily skilled in the art, specific meanings of the above-mentioned terms in the present application can be understood according to specific circumstances.

First Example

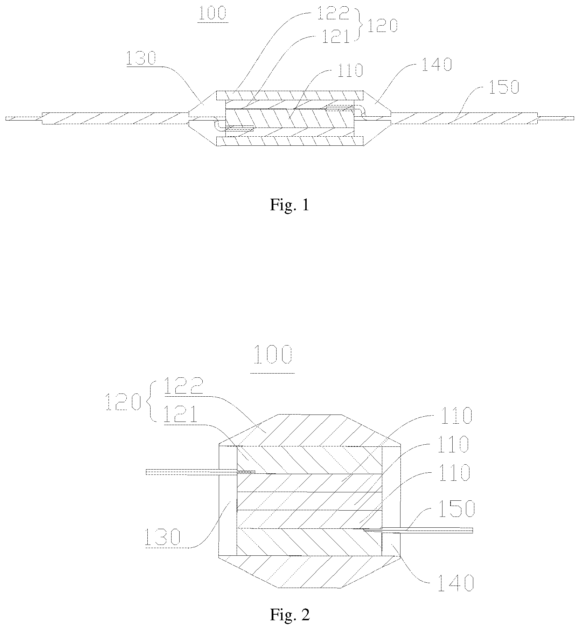

Referring to Fig. 1, an example of the present invention provides a hydrophone 100. The hydrophone 100 comprises: at least one rectangular-shape transduction element 110, a shell 120, a first sound-permeable sealing sheet 130, a second sound-permeable sealing sheet 140, and wires 150.

In the present example, the rectangular-shape transduction element 110 is a lead-based relaxor solid solution piezoelectric single-crystal element. The lead-based relaxor solid solution piezoelectric single-crystal element has a relatively high transverse piezoelectric coefficient, thus, the hydrophone 100 made on the basis of the lead-based relaxor solid solution piezoelectric single-crystal element also can have higher sensitivity.

The lead-based relaxor solid solution piezoelectric single-crystal element is a lead-based relaxor solid solution piezoelectric single-crystal element polarized in a [011] crystal direction and taking [100] or [0-11] as the sensing direction, that is, a lead-based relaxor solid solution piezoelectric single-crystal element of a transverse cut type.

Components of the rectangular-shape transduction element 110 comprise relaxor ferroelectric single crystals such as lead zinc niobate-lead titanate (PZN-PT), lead magnesium niobate-lead titanate (PMN-PT), lead magnesium niobate-lead zirconate titanate (PMN-PZT), lead indium niobate-lead magnesium niobate-lead titanate (PIN-PMN-PT) or derivative elements thereof. Since the materials such as lead zinc niobate-lead titanate (PZN-PT), lead magnesium niobate-lead titanate (PMN-PT), lead magnesium niobate-lead zirconate titanate (PMN-PZT), and lead indium niobate-lead magnesium niobate-lead titanate (PIN-PMN-PT) have extremely high transverse piezoelectric constants, for example, PZN-PT has the transverse piezoelectric constant of $d_{32}{\approx}-(3000{\sim}4000)$ pC/N, the transverse piezoelectric constant of $d_{31}{\approx}1100$ pC/N. moreover, this PZN-PT has the acoustic impedance of about 7 MRayls, which acoustic impedance is quite close to the acoustic impedance of water. Therefore, the above materials are quite suitable for making the transduction element of the hydrophone 100 with a transverse working mode having high sensitivity, and the strip-like transduction element 110 made from the above materials can have higher sensitivity.

In the present example, the rectangular-shape transduction element 110 can be of the number of one, two or more. If the hydrophone 100 is a mini-size hydrophone 100, there can be one rectangular-shape transduction element 110; but if the hydrophone 100 is a middle-size hydrophone 100, there can be a plurality of rectangular-shape transduction elements 110. In the present example, the number of the transduction element required by practical demands can be flexibly adapted according to different practical use requirements. When there are at least two such rectangular-shape transduction elements 110, at least two such rectangular-shape transduction elements 110 can be arranged in parallel.

As an alternative, when the hydrophone 100 is used in shallow water, the strip-like transduction element 110 can be a transverse vibration type of lead-base relaxor single-crystal element with the working mode of polarization in the [011] crystal direction and sensing an acoustic signal in the [100] crystal direction, so that the hydrophone 100 can have high sensitivity of measuring the acoustic signal. When the hydrophone 100 works in deep water, the strip-like transduction element 110 can be a transverse vibration type of lead-base relaxor single-crystal element with the working mode of polarization in the [011] crystal direction and sensing an acoustic signal in the [0-11] crystal direction, so that the hydrophone 100 further has high sensitivity of measuring the acoustic signal while ensuring working stability in deep water. In either case, the sensing direction hence faces are the two end faces of the strip-like transducer material. The shell 120 comprises: an acoustic damping shell 121 and a housing 122, and both the acoustic damping shell 121 and the housing 122 can be of a tubular structure. The acoustic damping shell 121 sleeves the rectangular-shape transduction element 110, and enables two ends of the rectangular-shape transduction element 110 to be located at openings of the two ends of said acoustic damping shell 121. The shape and the size of the inner diameter of the acoustic damping shell 121 match with the shape and the size of the rectangular-shape transduction element 110, so that the acoustic damping shell 121 can closely sleeve the rectangular-shape transduction element 110. Optionally, the acoustic damping shell 121 can be made from an acoustic damping rubber material. After sleeving the rectangular-shape transduction element 110 with the acoustic damping shell 121 and the protective housing 122, the shell 120 cuts off the acoustic signals from all side faces except the two unsleeved ends. Hence, only the two unsleeved ends of the rectangular-shape transduction element 110 can receive the acoustic signals.

As one embodiment, when there are a plurality of the rectangular-shape transduction elements 110, one end of each rectangular-shape transduction element 110 is connected with one end of an adjacent rectangular-shape transduction element 110, and the other end of each rectangular-shape transduction element 110 is connected with the other end of the adjacent rectangular-shape transduction element 110, so that the rectangular-shape transduction elements 110 are arranged in juxtaposition. The acoustic damping shell 121 then sleeves the plurality of rectangular-shape transduction elements 110 arranged in parallel. Furthermore, when there are a plurality of the rectangular-shape transduction elements 110, the plurality of the rectangular-shape transduction elements 110 are arranged in parallel along a width direction, and every two adjacent rectangular-shape transduction elements 110 are connected with each other.

The size of the inner diameter of the housing 122 is matched with the shape and the size of the acoustic damping shell 121, so that the housing 122 can protect the acoustic damping shell 121 and the strip-like transduction elements 110 by re-sleeving the acoustic damping shell 121, and can cut off the contact between the acoustic damping shell 121 and the strip-like transduction elements 110, and water. Since two ends of the housing 122 both have openings, one end of the housing 122 needs to be enclosed by the first sound-permeable sealing sheet 130, and then the other end of the housing 122 is enclosed by the second sound-permeable sealing sheet 140, further forming a total-enclosed structure. The shape and the size of the first sound-permeable sealing sheet 130 are matched with the shape and the size of the opening at one end of the housing 122, thus, by fixedly connecting the edge of the first sound-permeable sealing sheet 130 and the opening at one end of the housing 122, the first sound-permeable sealing sheet 130 can seal the opening at one end of the housing 122. The shape and the size of the second sound-permeable sealing sheet 140 are matched with the shape and the size of the opening at the other end of the housing 122, thus, by fixedly connecting the edge of the second sound-permeable sealing sheet 140 and the opening at the other end of the housing 122, the second sound-permeable sealing sheet 140 can seal the opening at the other end of the housing 122. By enclosing one end of the housing 122 with the first sound-permeable sealing sheet 130, and enclosing the other end of the housing 122 with the second sound-permeable sealing sheet 140, the hydrophone 100 can form a total-enclosed structure, so as to be cut off from water. Since the acoustic signal can be transmitted through the first sound-permeable sealing sheet 130 and the second sound-permeable sealing sheet 140, the acoustic signal in water can be respectively input to the two ends of the strip-like transduction element 110 through the first sound-permeable sealing sheet 130 and the second sound-permeable sealing sheet 140. The two ends of the strip-like transduction element 110, by receiving the acoustic signal respectively, can convert the acoustic signal to a corresponding electric signal.

Refer to Fig. 1 and Fig. 2. In a first embodiment of the present example, there can be one rectangular-shape transduction element 110, and two ends of the rectangular-shape transduction element 110 are both coupled with an external load through wires 150. In a second embodiment of the present example, there can be a plurality of strip-like transduction elements 110, and the plurality of strip-like transduction elements 110 can be connected in parallel and/or in series, and then coupled with an external load through the wires 150. The strip-like transduction element 110, through the coupling of its two ends with the wires 150, can output the electric signal corresponding to the acoustic signal converted by itself to the external load. The external load, by calculating a value of pressure intensity corresponding to the electric signal, can obtain a value of pressure intensity of water detected by the hydrophone 100. In the example shown, the wires 150 are coupled with the strip-like transduction element 110 by passing through the first sound-permeable sealing sheet 130 and the second sound-permeable sealing sheet 140 respectively, so that the first sound-permeable sealing sheet 130 and the second sound-permeable sealing sheet 140 are both opened with a through hole matched with the diameter of the wires 150, further, after the wires 150 are coupled with the strip-like transduction element 110 by passing through the through hole of the first sound-permeable sealing sheet 130 and the through hole of the second sound-permeable sealing sheet 140 respectively, due to the matching of the diameter, the hydrophone 100 still can maintain a total-sealed state.

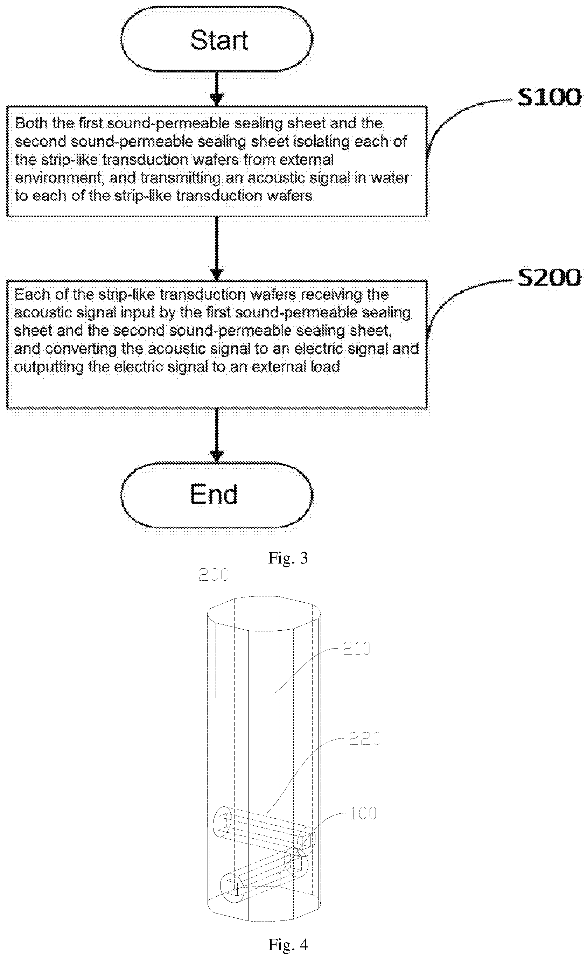

Refer to Fig. 3. Fig. 3 shows a flow chart of a transduction method provided as an example only. The method comprises Step S100 and Step S200:

Step S100: configuring both the first sound-permeable sealing sheet 130 and the second sound-permeable sealing sheet 140 to isolate each of the strip-like transduction elements 110 from external environment, and transmit an acoustic signal in water to each of the strip-like transduction elements 110;
Step S200: configuring each of the strip-like transduction elements 110 to receive through one end thereof the acoustic signal input by the first sound-permeable sealing sheet 130 and receive through the other end thereof the acoustic signal input by the second sound-permeable sealing sheet 140, and convert the acoustic signal to an electric signal and output the electric signal to the external load.

A person skilled in the art should clearly know that for the sake of descriptive convenience and preciseness, reference can be made to a corresponding process of the previous device for a specific working process of the method described above, and unnecessary details will not be given herein.

Refer to Fig. 4. An example of the present invention further provides a compound hydrophone 200. The compound hydrophone 200 comprises: a housing 210, a cavity 220, and a hydrophone 100. As one mode, there can be a plurality of cavities 220 in the compound hydrophone 200, and there also can be a plurality of hydrophones 100 corresponding to the cavities. Therefore, through the measurement of the plurality of hydrophones 100, the measurement precision is further improved. The shape and the size of each cavity 220 are matched with the shape and the size of the hydrophone 100, thus each hydrophone 100 can be arranged in the cavity 220. The plurality of hydrophones 100 are coupled with each other by being connected in series or in parallel. Each cavity 220 passes through the housing 210, so as to ensure that the two ends of the hydrophone 100 can receive the acoustic signal. Each cavity 220 and its adjacent cavity 220 define a fixed angle, so that the sound signals received by multiple hydrophones 100 can be comprehensively processed to improve on the omni-directionality of the compound hydrophone 200 notably for high frequency sound, i.e., that up to about half the fundamental resonance frequency of the strip-like transduction element.

As shown in Fig. 4, Fig. 4 shows a first embodiment of the compound hydrophone 200 provided in the example of the present invention. The housing 210 can be a cylindrical housing. There are two cylindrical-shaped cavities 220, and correspondingly, there also can be two hydrophones 100. Each cavity 220 is arranged between a top end and a bottom end of the housing 210. The axial directions of the two cylindrical-shaped cavities 220 are orthogonal and parallel to the top and the bottom end faces of the housing 210 respectively. Each hydrophone 100 is arranged in the corresponding cavity 220, so that the omni-directionality of the compound hydrophone 200 can is improved compared with when only one hydrophone 100 is used.

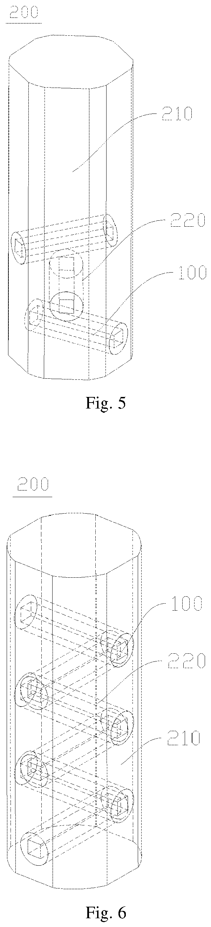

As shown in Fig. 5, Fig. 5 shows a second embodiment of the compound hydrophone 200 provided in the example of the present invention. The housing 210 can be a cylindrical housing. There are three cylindrical-shaped cavities 220, and correspondingly, there are also three hydrophones 100. Each cavity 220 is arranged between the top end and the bottom end of the housing 210. The axial direction of each cavity 220 and that of its adjacent cavity 220 define an angle of 60°, and the running directions of the three cavities 220 are parallel to the top end and the bottom end of the housing 210 respectively. Each hydrophone 100 is arranged in the corresponding cavity 220, so that the omni-directionality of the compound hydrophone 200 can be further improved as compared to the design shown in Fig. 4.

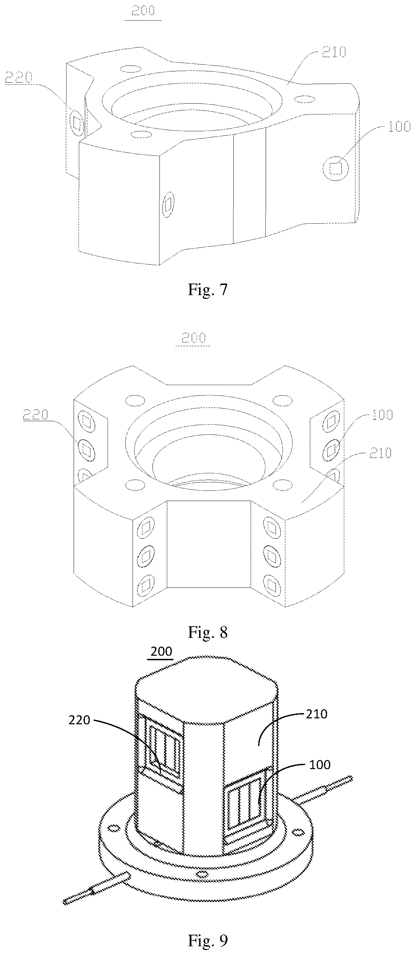

As shown in Fig. 6, Fig. 6 shows a third embodiment of the compound hydrophone 200 provided in the example of the present invention. The housing 210 can be a cylindrical housing. There are six cylindrical-shaped cavities 220, and correspondingly, there are also six hydrophones 100. Each cavity 220 is arranged between the top end and the bottom end of the housing 210. The axial direction of each cavity 220 and that of the adjacent cavity 220 are orthogonal, and all six cavities 220 are lying parallel to the top and the bottom end faces of the housing 210 respectively. In such a design, the six hydrophones 100 can be connected electrically in parallel, in series, or part-parallel-part-series, to attain a good compromise in the omni-directionality, sensitivity and electrical properties of the compound hydrophone 200. As shown in Fig. 7, Fig. 7 shows a fourth embodiment of the compound hydrophone 200 provided in the example of the present invention. The housing 210 can be an annular cylindrical housing, and three portions at an edge of the annular cylindrical housing all extend outwardly from a top end to a bottom end to form three protrusions. An equilateral triangle can be formed by connecting the three protrusions. There are three cavities 220. Each cavity 220 is provided at one protrusion, and penetrates through the protrusion width as shown. Thus, each cavity 220 can form an angle of 60° with an adjacent cavity 220, and the three cavities 200 are all located in the same horizontal plane. Each hydrophone 100 is arranged in a corresponding cavity 220, so that the compound hydrophone 200 can realize the measurement to the sound signals in three directions defining an angle of 60 ° with each other in the same plane.

As shown in Fig. 8, Fig. 8 shows a fifth embodiment of the compound hydrophone 200 provided in the example of the present invention. The housing 210 can be an annular cylindrical housing, and four portions at an edge of the annular cylindrical housing all extend outwardly from a top end to a bottom end to form four protrusions as shown. There are 12 cylindrical-shaped cavities 220. Every three cavities 220 are provided at one protrusion between a top wall and a bottom wall, and penetrate through the protrusion width. Thus, each cavity 220 is oriented at an angle of 90° with the cavities 220 of the adjacent protrusions. Each hydrophone 100 is arranged in a corresponding cavity 220, so that the compound hydrophone 200 can realize good omni-directionality despite the relatively large diameter of the annular cylindrical housing.

As shown in Fig. 9, Fig. 9 shows a sixth embodiment of the compound hydrophone 200 provided in the example of the present invention. The housing 210 can be a columnar cylindrical or rectangular housing. There can be two cavities 220, and correspondingly, there also can be two hydrophones 100. In the present embodiment, the hydrophone 100 is a middle-size hydrophone 100 composed of a plurality of transduction elements for improved sensitivity or electrical properties of the device. Each cavity 220 is arranged between the top end and the bottom end of the housing 210. A length direction of each cavity 220 and that of the adjacent cavity 220 are orthogonal, and both are parallel to the top and bottom end faces of the housing 210 respectively. Each hydrophone 100 is arranged in a corresponding cavity 220, so that the compound hydrophone 200. The resultant compound hydrophone 200 thus have not only high receiving sensitivity, good electrical characteristics but also good omni-directionality despite its size.

Second Example

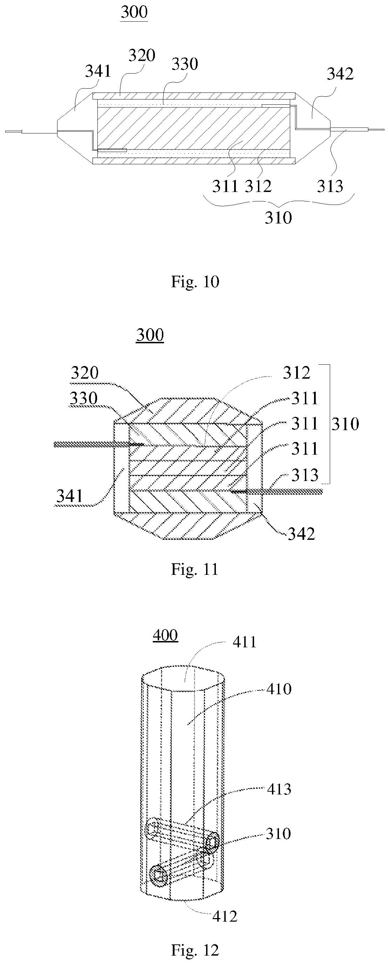

Fig. 10 shows a structural schematic view of a wrapped hydrophone sensor element 300 provided in an example of the present invention. The hydrophone element 300 comprises a sensor element 310, and the sensor element 310 comprises at least one rectangular-shape transduction element 311. The strip-like transduction element 311 is a lead-based relaxor solid solution piezoelectric single-crystal element. Thus, the hydrophone 300 can be enabled to have higher sensitivity.

Furthermore, the lead-based relaxor solid solution piezoelectric single-crystal element is a transverse-mode lead-based relaxor solid solution piezoelectric single-crystal element polarized in a [011] crystal direction and taking a [100] crystal direction as a sensing direction, that is, a transverse cut type of lead-based relaxor solid solution piezoelectric single-crystal element. Thereinto, components of the lead-based relaxor solid solution piezoelectric single-crystal element comprise: lead zinc niobate-lead titanate, lead magnesium niobate-lead titanate, lead magnesium niobate-lead zirconate titanate, lead indium niobate-lead magnesium niobate-lead titanate or derivative components thereof.

It is found through researches of the inventor that the existing most advanced piezoelectric ceramic material has the piezoelectric coefficient of 300~600 pC/N, the acoustic impedance of water is of 1.5 MRayls, and the acoustic impedance of PZT piezoelectric ceramic is of 12~18 Mrayls. However, PZN-7%PT taking the [100] crystal direction as a sensing direction (i.e. $d_{32}$ transverse sensing mode) and polarized in a [011] crystal direction has the transverse piezoelectric coefficient of d32≈-(3000~4000) pC/N, and the acoustic impedance of as low as 7 MRayls. This means that the reflection of the acoustic energies at the crystal sensing surface can be reduced, thus most of the acoustic energies can enter the crystal. Hence, if lead-based relaxor solid solution piezoelectric single-crystal element polarized in the [011] crystal direction and taking the [100] crystal direction as the sensing direction is used, the sensitivity of the hydrophone 300 can be improved.

In the present example, although the sensitivity of the hydrophone 300 can be improved by using the above transverse cut type of lead-based relaxor solid solution piezoelectric single-crystal element, the lead-based relaxor solid solution piezoelectric single-crystal element is relatively soft. For example, the above PZN-7%PT has an elastic compliance ratio of

$$S_{22}^{E} \approx 160{\sim}200 \mathrm{pm}^2 / N$$

. Therefore, if the transverse cut type of lead-based relaxor solid solution piezoelectric single-crystal element is bonded to a rigid backing material according to a conventional hydrophone design, a base portion of the transverse cut type of lead-based relaxor solid solution piezoelectric single-crystal element will adversely affect the piezoelectric and electrical performances of the piezoelectric single crystal due to mechanical restrictions.

Therefore, the design of the backing material is discarded in the example of the present invention, while the transverse cut type of lead-based relaxor solid solution piezoelectric single-crystal element works in a half-wavelength fundamental vibration mode with two free ends, so that the piezoelectric performances of the transverse cut type of lead-based relaxor solid solution piezoelectric single-crystal element will not be adversely affected, subsequently the sensitivity of the hydrophone 300 made can achieve an expected high level.

Refer to Fig. 10 again. The sensor element 310 comprises four side surfaces 312 and two ends. The two ends are opposite first end portion and second end portion respectively. The first end portion and the second end portion are respectively coupled with an external load through wires 313. The four side surfaces 312 are wrapped with a first thicker inner shell 330. The first shell 330 is made from a soft and high damping material such as cork pads. This is to ensure that the transverse cut type of lead-based relaxor solid solution piezoelectric single-crystal element can vibrate freely for high device sensitivity.

In addition to said first shell, the four side surfaces 312 of the strip-like transduction element can be further wrapped by a thinner second shell 320 such that the first shell 330 is located between the side surface 312 of the transducer element and the outer second shell 320.

Furthermore, the second shell 330 can be made from a soft high damping material, preferably of a layered structure such as Teflon belt and wrapping layer thereof This is help damp out rubbing noise produced by the friction between the strip-like transduction element 311 and the bore surfaces of a rigid housing such as the cylindrical cavities to be described below.

The wrapping of both soft and high damping shells 330, 320 not only enables the strip-like transduction element 311 comprised in the hydrophone element 310 to vibrate freely but also to help damp out rubbing noise produced by the friction between the strip-like transduction element 311 and the housing bore surfaces. Furthermore, since the strip-like transduction element 311 is in an unconstrained half-wavelength vibration mode with two free ends, its fundamental resonant frequency is twice that of a strip-like transduction element 311 bonded to the rigid backing material (i.e. which works in a quarter-wavelength vibration mode), the hydrophone 300 made on the basis of the strip-like transduction element element 311 thus has higher available frequency upper limit and larger working frequency range .

It should be indicated that the first shell 330 and the second shell 320 merely wrap the side surface 312, but do not wrap the two ends, that is, in cases where only the first shell 330 and the second shell 320 are provided, the two ends can contact the external environment.

The two ends are respectively provided with a sound-permeable sealing structure, where a first end portion is provided with a first sound-permeable sealing structure 341, and a second end portion is provided with a second sound-permeable sealing structure 342. The first sound-permeable sealing 341 and the second sound-permeable sealing structure 342 are both made from a waterproof sound-permeable material. Since both the first and second shell 330 and 320 are made from the acoustic damping material, an external acoustic signal can be transmitted to the two ends of the sensor element 310 through the first sound-permeable sealing 341 and the second sound-permeable sealing structure 342, so that the sensor element 310 converts the received acoustic signal to an electric signal, and transmits the electric signal to an external load through the wires 350.

As shown in Fig. 11, in the present example, the sensor element 310 can comprise a plurality of the strip-like transduction elements 311. The plurality of the strip-like transduction elements 311 can be connected in series electrically as shown in the example.

Optionally, the plurality of the strip-like transduction elements 311 can be arranged in parallel electrically. It also may be the case that a part of the strip-like transduction elements are connected in series, and the series-connected parts are then connected in parallel to suit application needs. Regardless of the electrical connection, it can be understood that the sensor element 310 including the plurality of strip-like transduction elements 311 also has four side surfaces 312 and two ends. The four side surfaces 312 of the sensor element 310 including the plurality of strip-like transduction elements 311 are also wrapped by the first shell 330 and the second shell 320 to enable the compound strip-like transduction element 310 to vibrate freely and to dump out any rubbing noise between the strip-like transduction element 311 and the housing bore surfaces.

Third Example

An example of the present invention further provides a compound hydrophone. The compound hydrophone comprises a housing and at least two sensor elements in different arrangement directions.

Each of the sensor elements comprises at least one strip-like transduction element. The strip-like transduction element is a lead-based relaxor solid solution piezoelectric single-crystal element. The sensor element comprises four side surfaces and two ends. The side surfaces are wrapped by an inner shell made from a soft and high damping material.

Optionally, each of the sensor elements can comprise a plurality of the strip-like transduction elements. In the present example, the multiple strip-like transduction elements are bonded together into two rectangular-shaped sensor elements and the two rectangular sensor elements are oriented with their end direction orthogonal to one another to improve on the omni-directivity of the resultant compound hydrophone.

Optionally, in the present example, the compound hydrophone can comprise more than two sensor elements, each having multiple transduction elements in different electrical arrangements, and the bonded sensor elements are then in different arrangement directions, to improve on the omni-directionality of the compound hydrophone while fulfilling the sensitivity and electrical characteristics of the device.

The hydrophone housing contains at least two columnar cavities with axes of different directions, and each columnar cavity is provided with one sensor element wrapped by the first and second soft and high damping shells. Each columnar cavity penetrates through the housing cross-section, so that the two ends of the sensor element provided in the columnar cavity contact the external environment. Thereinto, the shape and the size of each columnar cavity are matched with the shape and the size of one sensor element wrapped by the soft and high damping first and second shells.

In the present example, the hydrophone housing can have a plurality of structures. For example, the housing can be of a columnar structure.

As shown in Fig. 12, it shows a structural schematic view of a compound hydrophone 400 provided in an example of the present invention. The compound hydrophone 400 comprises a housing 410 and at least two sensor elements 310 in different arrangement directions, where the housing 410 is of a columnar structure, and the columnar structure can be a cylindrical housing or a rectangular housing, which is not limited in the present example. In the example shown, the housing 410 is opened with at least two columnar cavities 413 with axes of different directions.

Optionally, when the hydrophone housing 410 is of a columnar structure, the housing 410 comprises a third end portion 411 and a fourth end portion 412 opposite to the third end portion 411. The respective columnar cavities 413 in the housing 410 can be successively deposited between the third end portion 411 and the fourth end portion 412 at desired intervals. That is, the respective sensor elements 310 are distributed at desired intervals in the axial direction of the housing 410. It should be indicated that the sensor elements 310 provided in the columnar cavities 413 of the housing 410 are sensor elements 310 wrapped by the first and second soft and high damping shells.

Optionally, the axes of adjacent columnar cavities 413 define an angle therebetween, and the angle can be flexibly set according to practical requirements, for example, the angle can be of 90 degrees or 60 degrees. Generally, the angle can be an acute angle, an obtuse angle, or a right angle. Since each columnar cavity 413 is provided with one sensor element 310, the axes of two adjacent columnar cavities 413 define an angle therebetween, that is, two adjacent sensor elements 310 define an angle therebetween.

As an embodiment, the hydrophone housing 410 can contain three columnar cavities 413, with the axes of two adjacent columnar cavities 413 oriented at 60 degrees apart. As another embodiment, the compound hydrophone 400 can comprise four columnar cavities 413 with the axes of two adjacent columnar cavities 413 oriented at 90 degrees apart.

For another example, the hydrophone housing can comprise an annular structure and at least two protrusions or arm-like structures provided at the outer face of the annular structure.

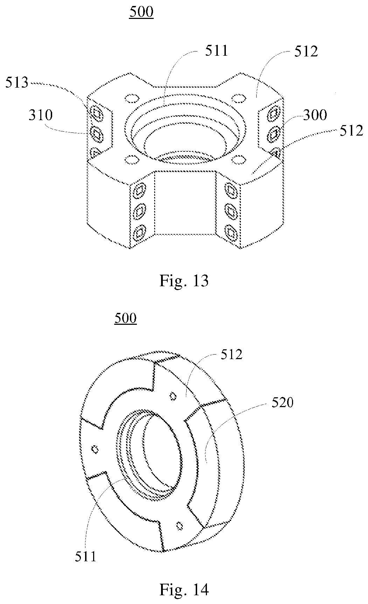

As shown in Fig. 13, it shows a structural schematic view of another compound hydrophone 500 provided in an example of the present invention. The compound hydrophone 500 comprises a housing 510 and at least two sensor elements 310 in different arrangement directions, where the housing 510 comprises an annular structure 511, and the columnar structure can be a cylindrical housing or a rectangular housing and protrusions or arm-like structures 512 arranged at the outer face of the annular structure 511 at equal angular intervals. Each of the protrusions or arm-like structures 512 contains at least one such columnar cavity 513, and each of the columnar cavities 513 is fitted with one sensor element 310 wrapped by the first and second soft and high damping shells.

Optionally, in the present example, an axis of the columnar cavity 513 in each protrusion or arm-like structure 512 can be perpendicular to a protruding direction of the protrusion 512.

Optionally, each of the protrusions or arm-like structures 512 can contain at least two such columnar cavities 513, and axes of the respective columnar cavities 513 in the same protrusion or arm-like structure 512 are parallel to each other. For the detailed arrangement manner, reference can be made to relevant description with respect to Fig. 4 to Fig. 9 in the above contents.

Optionally, when the hydrophone housing 510 is of the structure shown in figure 13, as shown in Fig. 14, the first sound-permeable sealing structure and the second sound-permeable sealing structure of respective sensor element 310 located in the same protrusion 512 can fill up the open space at two sides of the protrusion or arm-like structure 512, forming a new sound-permeable sealing assembly 520. The two sides refer to two sides of the protrusion or arm-like structure 512 along an arc direction of the annular structure 511.

To sum up, the present invention provides a hydrophone 100, a transduction method, and a compound hydrophone 200. With the tubular structure of the shell 120, the shell 120 can sleeve at least one strip-like transduction element 110. By sleeving one end of the shell 120 with the first sound-permeable sealing sheet 130 and sleeving the other end of the shell 120 with the second sound-permeable sealing sheet 140, and coupling the two ends of at least one strip-like transduction elements 110 with the external load through the wires 150, the coupling of the transduction element with the external load is realized while the transduction element is sealed underwater.

Both the first sound-permeable sealing sheet 130 and the second sound-permeable sealing sheet 140 isolate each of the strip-like transduction elements 110 from the external environment, and transmit the acoustic signal in water to each strip-like transduction element 110. Each strip-like transduction element 110 is able to receive through one end thereof the acoustic signal input by the first sound-permeable sealing sheet 130 and receive through the other end thereof the acoustic signal input by the second sound-permeable sealing sheet 140, and convert the acoustic signal to an electric signal and output the electric signal to the external load. The external load, by calculating a value of pressure corresponding to the electric signal, can precisely obtain a pressure intensity measured in water. Since the strip-like transduction element 110 in the hydrophone 100 is sleeved by the shell 120, and the shell 120 is of a tubular structure, the two ends of the strip-like transduction element 110 are free ends which are not enclosed by the shell 120. Since the two ends of the strip-like transduction element 110 are free, the two ends of the strip-like transduction element 110 both can receive the acoustic signal. As the strip-like transduction element is in a free half-wavelength vibration state, the frequency range received thereby can be effectively extended. Moreover, the piezoelectric element 110 used has the characteristics of a higher transverse piezoelectric coefficient than the commonly used piezoelectric ceramic and the acoustic impedance close to water medium, the receiving sensitivity of the mini-size or middle-size hydrophone 100 can be effectively improved.

The above-mentioned is merely for preferable examples of the present invention and not used to limit the present invention. The scope of protection of the present invention is defined in the appended claims.

**Industrial Applicability**

For the hydrophone and the compound hydrophone provided in the present invention, the coupling of the transduction element with the external load is realized while the transduction element is sealed underwater. Besides, the hydrophone provided in the present invention uses the lead-based relaxor solid solution piezoelectric single-crystal element as the transduction element, thereby improving the sensitivity of the hydrophone. The side surfaces of the transduction element are wrapped by at least a shell of soft and high damping material, the transduction element is free from any mechanical constraint with two free ends, thereby improving the piezoelectric performance of the transduction element, further improving the sensitivity of the hydrophone. By providing a plurality of hydrophones, and improving the arrangement directions of the plurality of hydrophones, the omnidirectionality of the compound hydrophone can be effectively improved.

**Claims**

1. A hydrophone (100), comprising: a rectangular-shape transduction element (110) of two end sensing faces, a damping shell or wrapping (121), a rigid tubular housing (122), a first sound-permeable seal (130), a second sound-permeable seal (140) and wires (150);

   wherein the first sound-permeable seal (130) covers one open end of the rigid tubular housing (122), the second sound-permeable seal (140) covers the other open end of the rigid tubular housing (122), and the rectangular-shape transduction element (110) is connected to an external load via wires (150) through either or both sound-permeable seals;

   wherein both the first and second sound-permeable seals (130, 140) serve to waterproof the rectangular-shape transduction element (110) from external environment while allowing the acoustic signal in water to transmit through them to the rectangular-shape transduction element (110);

   **characterized in that** the rectangular-shape transduction element is made of lead based relaxor element solid solution piezoelectric single crystal polarized in a [011] crystal direction and having either [100] or [0-11] crystal direction as the sensing direction, the latter being also the axial direction of the transduction element;

   wherein said relaxor single crystal comprises solid solutions of lead zinc niobate-lead titanate, lead magnesium niobate-lead titanate, lead magnesium niobate-lead zirconate titanate, lead indium niobate-lead magnesium niobate-lead titanate, or derivative compositions thereof;

   wherein the damping shell or wrapping (121) is applied over all side faces of the rectangular-shape transduction element except both end sensing faces;

   wherein the rigid tubular housing (122) sleeves the wrapped rectangular-shape transduction element (110) so that the damping shell or wrapping (121) helps to damp out rubbing noise produced by the friction between the rectangular-shape transduction element (110) and a bore surface of the rigid tubular housing;

   wherein said rectangular-shape transduction element (110) receives the acoustic signal via its both end sensing

   faces and converts the acoustic signal to an electric signal and outputs the electric signal to the external load.

2. The hydrophone (100) of claim 1, wherein said transduction element is made of a bonded assembly of said rectangular-shape transduction elements (110) electrically connected either in parallel, in series, or part-parallel and part-series.

3. A compound hydrophone (200), comprising the hydrophone according to any one of claims 1 or 2, and a columnar shape housing (210) containing a plurality of cavities (220); wherein each of the cavities (220) runs diametrally through the cross section of the columnar shape housing (210) and adjacent cavities are at a fixed angle to one another;

wherein each of the cavities comprises one wrapped transduction element (100);

wherein the transduction elements are electrically connected either in parallel, in series or part- parallel and part-series;

**4.** The compound hydrophone (200) of claim 3, wherein the shape and size of each of the cavities (220) are matched with the shape and size of the wrapped transduction elements (100).

**5.** A compound hydrophone (200), comprising the hydrophone according to any one of claims 1 or 2, and a housing of annular shape containing a plurality of cavities (220);

wherein the annular-structure housing consists of a plurality of protrusion structures extending radially outwards from its outer face, each of the protrusion structures containing at least one circumferentially-oriented cavity (220) linking both exposed side faces of said structure;

wherein each of the cavities comprises a wrapped transduction element (100);

wherein the transduction elements are electrically connected either in parallel, in series or part-parallel and part-series;

wherein the space in between the structures is molded in a waterproof sound

window material with wires connected to external loads.

**6.** The compound hydrophone (200) of claim 5, wherein the shape and size of each of the cavities (220) are matched with the shape and size of the wrapped transduction elements (100).

## Patentansprüche

**1.** Hydrophon (100), umfassend: ein rechteckförmiges Wandlungselement (110) mit zwei sensorischen Endflächen, eine Dämpfungshülle oder Ummantelung (121), ein biegesteifes rohrförmiges Gehäuse (122), eine erste schalldurchlässige Dichtung (130), eine zweite schalldurchlässige Dichtung (140) und Drähte (150);

wobei die erste schalldurchlässige Dichtung (130) ein offenes Ende des biegesteifen rohrförmigen Gehäuses (122) abdeckt, die zweite schalldurchlässige Dichtung (140) das andere offene Ende des biegesteifen rohrförmigen Gehäuses (122) abdeckt und das rechteckförmige Wandlungselement (110) über Drähte (150) entweder über eine oder beide schalldurchlässigen Dichtungen an eine äußere Last angeschlossen ist;

wobei sowohl die erste als auch die zweite schalldurchlässige Dichtung (130, 140) dazu dienen, das rechteckförmige Wandlungselement (110) gegen die äußere Umgebung wasserdicht zu machen, während sie dem akustischen Signal im Wasser ermöglichen, durch sie hindurch auf das rechteckförmige Wandlungselement (110) übertragen zu werden;

**dadurch gekennzeichnet, dass** das rechteckförmige Wandlungselement aus einem piezoelektrischen Einkristall eines auf Blei basierenden Relaxorelements fester Lösung hergestellt ist, der in einer [011] Kristallrichtung polarisiert ist und entweder die [100] oder [0-11] Kristallrichtung als sensorische Richtung aufweist, wobei Letztere auch die Axialrichtung des Wandlungselements ist;

wobei das Relaxor-Einkristall feste Lösungen aus Bleizinkniobat-Bleititanat, Bleimagnesiumniobat-Bleititanat, Bleimagnesiumniobat-Bleizirkonattitanat, Bleiindiumniobat-Bleimagnesiumniobat-Bleititanat oder Derivatzusammensetzungen davon umfasst;

wobei die Dämpfungshülle oder Ummantelung (121) über alle Seitenflächen des rechteckförmigen Wandlungselements außer den beiden sensorischen Endflächen aufgebracht ist;

wobei das biegesteife rohrförmige Gehäuse (122), das ummantelte rechteckförmige Wandlungselement (110) so muffenartig umschließt, dass die Dämpfungshülle oder Ummantelung (121) hilft, das durch die Reibung zwischen dem rechteckigen Wandlungselement (110) und einer Bohrungsoberfläche des biegesteifen rohrförmigen Gehäuses erzeugte Reibgeräusch zu unterdrücken; wobei das rechteckförmige Wandlungselement (110) das akustische Signal über seine beiden sensorischen Endflächen empfängt und das akustische Signal in ein elektrisches Signal umwandelt und das elektrische Signal an eine äußere Last abgibt.

**2.** Hydrophon (100) nach Anspruch 1, wobei das Wandlungselement aus einer geklebten Baugruppe der rechteckförmigen Wandlungselemente (110) hergestellt ist, die entweder parallel, in Serie oder teils parallel und teils in Serie geschaltet sind.

**3.** Verbundhydrophon (200), welches das Hydrophon nach einem der Ansprüche 1 oder 2 und ein säulenförmiges Gehäuse (210) umfasst, das eine Vielzahl von Hohlräumen (220) enthält; wobei jeder der Hohlräume (220) diametral durch den Querschnitt des säulenförmigen Gehäuses (210) verläuft und benachbarte Hohlräume in einem festen Winkel zueinander liegen;

wobei jeder der Hohlräume ein ummanteltes Wandlungselement (100) umfasst; wobei die Wandlungselemente entweder elektrisch parallel, in Serie oder teils parallel und teils in Serie geschaltet sind.

4. Verbundhydrophon (200) nach Anspruch 3, wobei die Form und Größe von jedem der Hohlräume (220) auf die Form und Größe der ummantelten Wandlungselemente abgestimmt ist.

5. Verbundhydrophon (200), welches das Hydrophon nach einem der Ansprüche 1 oder 2 und ein ringförmiges Gehäuse umfasst, das eine Vielzahl von Hohlräumen (220) enthält;

   wobei das Gehäuse ringförmiger Struktur aus einer Vielzahl von Auskragungsstrukturen besteht, die sich von seiner Außenfläche aus radial nach außen erstrecken, wobei jede der Auskragungsstrukturen mindestens einen auf dem Umfang ausgerichteten Hohlraum (220) enthält, der beide exponierten Seitenflächen der Struktur verbindet;

   wobei jeder der Hohlräume ein ummanteltes Wandlungselement (100) umfasst; wobei die Wandlungselemente entweder elektrisch parallel, in Serie oder teils parallel und teils in Serie geschaltet sind;

   wobei der zwischen den Strukturen liegende Raum mit einem Schallfenstermaterial mit Drähten ausgegossen ist, die an die äußeren Lasten angeschlossen sind.

6. Verbundhydrophon (200) nach Anspruch 5, wobei die Form und die Größe von jedem der Hohlräume (220) auf die Form und Größe der ummantelten Wandlungselemente (100) abgestimmt sind.

**Revendications**

1. Hydrophone (100), comprenant: un élément de transduction de forme rectangulaire (110) de deux faces de détection d'extrémité, une coque ou enveloppe d'atténuation (121), un boîtier tubulaire rigide (122), un premier joint d'étanchéité perméable aux sons (130), un second joint d'étanchéité perméable aux sons (140) et des fils (150);

   dans lequel le premier joint d'étanchéité perméable aux sons (130) recouvre une extrémité ouverte du boîtier tubulaire rigide (122), le second joint d'étanchéité perméable aux sons (140) recouvre l'autre extrémité ouverte du boîtier tubulaire rigide (122), et l'élément de transduction de forme rectangulaire (110) est connecté à une charge externe via des fils (150) à travers l'un ou l'autre ou les deux joints d'étanchéité perméables aux sons;

   dans lequel à la fois les premier et second joints d'étanchéité perméables aux sons (130, 140) servent à rendre étanche à l'eau l'élément de transduction de forme rectangulaire (110) vis-à-vis de l'environnement extérieur tout en permettant au signal acoustique dans l'eau de se transmettre à travers eux jusqu'à l'élément de transduction de forme rectangulaire (110);

   **caractérisé en ce que** l'élément de transduction de forme rectangulaire est constitué d'un monocristal piézoélectrique en solution solide à élément relaxant à base de plomb polarisé dans une direction cristalline [011] et ayant la direction cristalline soit [100] soit [0-11] en tant que direction de détection, cette dernière étant également la direction axiale de l'élément de transduction;

   dans lequel ledit monocristal relaxant comprend des solutions solides de niobate de plomb zinc-titanate de plomb, niobate de plomb magnésium-titanate de plomb, niobate de plomb magnésium-titanate zirconate de plomb, niobate de plomb indium-niobate de plomb magnésium-titanate de plomb, ou des compositions dérivées de celles-ci;

   dans lequel la coque ou l'enveloppe d'atténuation (121) est appliquée sur toutes les faces latérales de l'élément de transduction de forme rectangulaire à l'exception des deux faces de détection d'extrémité;

   dans lequel le boîtier tubulaire rigide (122) est emmanché sur l'élément de transduction de forme rectangulaire (110) enveloppé, de sorte que la coque ou l'enveloppe d'atténuation (121) aide à atténuer un bruit de frottement produit par la friction entre l'élément de transduction de forme rectangulaire (110) et une surface d'alésage du boîtier tubulaire rigide;

   dans lequel ledit élément de transduction de forme rectangulaire (110) reçoit le signal acoustique via ses deux faces de détection d'extrémité et convertit le signal acoustique en un signal électrique et délivre en sortie le signal électrique à la charge externe.

2. Hydrophone (100) selon la revendication 1, dans lequel ledit élément de transduction est constitué d'un assemblage lié desdits éléments de transduction de forme rectangulaire (110) électriquement connectés soit en parallèle, soit en série, soit partiellement en parallèle et partiellement en série.

3. Hydrophone composite (200), comprenant l'hydrophone selon l'une quelconque des revendications 1 ou 2, et un boîtier en forme de colonne (210) contenant une pluralité de cavités (220);

   dans lequel chacune des cavités (220) s'étend diamétralement à travers la section transversale du boîtier en forme de colonne (210) et des cavités adjacentes sont à un angle fixe les unes par rapport aux autres;

dans lequel chacune des cavités comprend un élément de transduction (100) enveloppé;

dans lequel les éléments de transduction sont électriquement connectés soit en parallèle, soit en série, soit partiellement en parallèle et partiellement en série.

4. Hydrophone composite (200) selon la revendication 3, dans lequel la forme et la taille de chacune des cavités (220) concordent avec la forme et la taille des éléments de transduction (100) enveloppés.

5. Hydrophone composite (200), comprenant l'hydrophone selon l'une quelconque des revendications 1 ou 2, et un boîtier de forme annulaire contenant une pluralité de cavités (220);

dans lequel le boîtier à structure annulaire est constitué d'une pluralité de structures en saillie s'étendant radialement vers l'extérieur à partir de sa face externe, chacune des structures en saillie contenant au moins une cavité orientée de manière circonférentielle (220) reliant les deux faces latérales exposées de ladite structure;

dans lequel chacune des cavités comprend un élément de transduction (100) enveloppé;

dans lequel les éléments de transduction sont électriquement connectés soit en parallèle, soit en série, soit partiellement en parallèle et partiellement en série ; dans lequel l'espace entre les structures est moulé dans un matériau de fenêtre pour les sons étanche à l'eau avec des fils connectés à des charges externes.

6. Hydrophone composite (200) selon la revendication 5, dans lequel la forme et la taille de chacune des cavités (220) concordent avec la forme et la taille des éléments de transduction (100) enveloppés.

Fig. 1

Fig. 2

Start

Both the first sound-permeable sealing sheet and the second sound-permeable sealing sheet isolating each of the strip-like transduction wafers from external environment, and transmitting an acoustic signal in water to each of the strip-like transduction wafers

S100

Each of the strip-like transduction wafers receiving the acoustic signal input by the first sound-permeable sealing sheet and the second sound-permeable sealing sheet, and converting the acoustic signal to an electric signal and outputting the electric signal to an external load

S200

End

Fig. 3

Fig. 4

Fig. 5

Fig. 6

Fig. 7

Fig. 8

Fig. 9

300

Fig. 10

300

Fig. 11

400

Fig. 12

500

511    512

513

310    300

512

Fig. 13

500

512

520

511

Fig. 14

**REFERENCES CITED IN THE DESCRIPTION**

**Patent documents cited in the description**

- CN 2016107985272
- US 20130208571 A